(19) Europäisches Patentamt
European Patent Office
Office européen des brevets

(11) Veröffentlichungsnummer: **0 626 343 B1**

(12) **EUROPÄISCHE PATENTSCHRIFT**

(45) Veröffentlichungstag der Patentschrift: **11.10.95**

(51) Int. Cl.[6]: **C01B 15/12**, B01J 8/26

(21) Anmeldenummer: **94105353.0**

(22) Anmeldetag: **07.04.94**

(54) **Verfahren zur Herstellung von Natriumperboratmonohydrat.**

(30) Priorität: **15.05.93 DE 4316320**

(43) Veröffentlichungstag der Anmeldung:
**30.11.94 Patentblatt 94/48**

(45) Bekanntmachung des Hinweises auf die
Patenterteilung:
**11.10.95 Patentblatt 95/41**

(84) Benannte Vertragsstaaten:
**AT BE CH DE DK ES FR GB GR IE IT LI NL PT SE**

(56) Entgegenhaltungen:
**EP-A- 0 244 820**
**DE-A- 1 930 286**
**FR-A- 2 417 470**

**'Firmenprospekf Fliessbett-Technik 23.08 31 RBhe 15' , SULZER ESCHER WYSS**

(73) Patentinhaber: **DEGUSSA AKTIENGESELL-SCHAFT**
**Weissfrauenstrasse 9**
**D-60311 Frankfurt (DE)**

(72) Erfinder: **Schütte, Rüdiger, Dr.**
**Cauzpertstrasse 42**
**D-79618 Rheinfelden (DE)**
Erfinder: **Ruhs, Alexander, Dr.**
**Adolf-Senger-Strasse 41**
**D-79618 Rheinfelden (DE)**
Erfinder: **Klasen, Claas-Jürgen, Dr.**
**Frankfurter Strasse 23**
**D-63517 Rodenbach (DE)**
Erfinder: **Alt, Hans-Christian**
**Spessartstrasse 9**
**D-63571 Gelnhausen (DE)**

**Beschreibung**

Die Erfindung richtet sich auf ein Verfahren zur Herstellung von Natriumperborat-monohydrat durch Dehydratisierung von Natriumperborat-tetrahydrat in einer Wirbelschicht mit erhitzter Luft. Das Verfahren führt zu Natriumperborat-monohydrat mit hoher Abriebfestigkeit.

Natriumperborat-monohydrat mit einem Aktivsauerstoffgehalt von etwa 15 bis 16 Gew.-% gewinnt gegenüber Natriumperborat-tetrahydrat wegen seines höheren Aktivsauerstoffgehalts und höheren Lösegeschwindigkeit zunehmend als Bleichkomponente in Wasch- und Reinigungsmitteln an Bedeutung.

Natriumperborat-monohydrat läßt sich, wie dies bereits die FR-PS 1 081 421 lehrt, durch Dehydratisierung von Natriumperborat-tetrahydrat mittels eines erhitzten Luftstroms, wobei das zu dehydratisierende Material in fluidisiertem Zustand gehalten wird, herstellen. Nachteil dieses Verfahrens ist die geringe Abriebbeständigkeit, woraus Probleme bei der Handhabung, insbesondere der pneumatischen Förderung resultieren.

Es hat nicht an Versuchen gefehlt, die Bedingungen während der Dehydratisierung so einzustellen, daß Monohydrat mit erhöhter Abriebfestigkeit erhalten wird.

Gemäß dem in der DE-OS 19 30 286 beschriebenen Verfahren wird dem Fließbetttrockner erhitzte Luft mit einer Temperatur von 180 bis 210 °C zugeführt und die Ablufttemperatur auf einem konstanten Wert gehalten. Die hohen Temperaturen sind nicht unproblematisch, da es leicht zur Agglomeratbildung und Verlust an Aktivsauerstoff kommt; zudem genügt die Abriebbeständigkeit des erhaltenen Monohydrats nicht mehr den heute gestellten Anforderungen.

Ein verbessertes Dehydratisierungsverfahren lehrt die DE-PS 22 58 319: Hierbei wird in der die Kristallkörner umgebenden Luft eine relative Feuchtigkeit von 40 bis 80 % aufrechterhalten und die Temperatur der Abluft auf mindestens 60 °C eingestellt, damit ein Anschmelzen erreicht wird. Die erforderliche Feuchtigkeit wird durch Einspeisen von Dampf zur Trocknungsluft eingestellt. Alternativ hierzu kann gemäß dem Zusatzpatent 24 44 780 die relative Luftfeuchtigkeit auch durch das verdampfende Kristallwasser erzeugt werden, wodurch sich aber die Zeitdauer für die Dehydratisierung wesentlich verlängert, so daß die Raum-Zeit-Ausbeute abnimmt.

Gemäß den Ausführungen in der EP-8 0 194 952 wird in den beiden vorerwähnten Verfahren die zweistufige Ausführung sowie die Bildung und der Austrag von Staub als nachteilig angeführt und demgegenüber ein einstufiges Verfahren mit einer Lufteintrittstemperatur von 100 bis 180 °C, einer Wirbelschichttemperatur von 65 bis 80 °C und einer relativen Feuchte der Luft in der Wirbelschicht von 10 bis 40 % als vorteilhafter herausgestellt. Zur Dehydratisierung von Tetrahydrat im Produktionsmaßstab ist das Verfahren auf die Verwendung eines zylindrischen Wirbelschichttrockners begrenzt. Bauartbedingt und wegen der geringen zulässigen Strömungsgeschwindigkeit der Trocknungsluft und geringen zulässigen Feuchte ist nur ein geringer Massenstrom an Trocknungsluft und damit Trocknungsenergie in die Wirbelschicht eintragbar, so daß nur ein geringer Produktdurchsatz möglich ist.

Aufgabe der Erfindung ist, ein weiteres Verfahren zur Herstellung von Natriumperborat-monohydrat mit hoher Abriebfestigkeit durch Dehydratisieren von Natriumperborat-tetrahydrat in der Wirbelschicht unter Verwendung erhitzter Luft aufzuzeigen. Das Verfahren sollte sich problemlos in technisch übliche, beispielsweise rinnenförmige Fließbetttrockner integrieren lassen und zusätzlich gegenüber herkömmlicher Fahrweise energetisch vorteilhafter sein.

Gefunden wurde ein Verfahren zur Herstellung von Natriumperborat-monohydrat durch Dehydratisierung von Natriumperborat-tetrahydrat in einer Wirbelschicht mit erhitzter Luft, wobei die Temperatur der in die Wirbelschicht eintretenden Luft zwischen 80 und 220 °C und die Temperatur der Wirbelschicht zwischen 40 und 90 °C liegt, das dadurch gekennzeichnet ist, daß man innerhalb der Wirbelschicht Kontaktflächen anordnet, deren Gesamtfläche das 1- bis 500-fache der Fläche des Wirbelschicht-Anstrombodens ausmacht.

Die Kontaktflächen machen vorzugsweise das 2- bis 100-fache, insbesondere 2- bis 20-fache, der Fläche des Anströmbodens der Wirbelschichtvorrichtung aus.

Die Wirbelschichtvorrichtung kann zylinderförmig oder längsgestreckt, d. h. kanal- bzw. rinnenförmig, ausgebildet sein und eine oder mehrere Stufen beziehungsweise Zonen umfassen. Bevorzugt werden rinnenförmige Wirbelschichtvorrichtungen, welche vorzugsweise in mehrere Zonen unterteilt sind, wobei die Zonen zweckmäßigerweise durch Wehre voneinander getrennt sind. Die Zonen können mit einer einzigen oder vorzugsweise mindestens zwei getrennten Luftzuführungen mit Trocknungs-/Fluidisierungsluft versorgt werden. Die Temperatur der verschiedenen Zonen zugeführten Luft kann unterschiedlich sein. Vorteilhaft ist es, die Temperatur der der ersten Zone, in diese wird meist auch das Tetrahydrat eingebracht, zugeführten Luft unterhalb, im allgemeinen 40 bis 80 °C unterhalb derjenigen der den folgenden Zonen zugeführten Luft, zu halten.

Zweckmäßigerweise sind die Kontaktflächen als Wärmetauscher, vorzugsweise als plattenförmige Wärmetauscher ausgebildet. Der oder die Wärmetauscher werden üblicherweise von einem flüssigen Wärmeträgermedium durchströmt. Die Eingangstemperatur liegt im allgemeinen im Bereich zwischen 70 und 140 °C, vorzugsweise 80 bis 130 °C und insbesondere 100 bis 130 °C. Die Austrittstemperatur des Mediums wird im allgemeinen 5 bis 30 °C unterhalb der Eingangstemperatur liegen. Zweckmäßigerweise werden die Eingangstemperatur und Strömungsgeschwindigkeit des Wärmeträgermediums so gewählt, daß sich eine Oberflächentemperatur der Wärmetauscherflächen von unter 120 °C, vorzugsweise 90 bis 110 °C, einstellt. Eine Oberflächentemperatur von 110 °C sollte insbesondere im Zuführungsbereich und in Zonen mit noch hohem Anteil an Perborattetrahydrat nicht überschritten werden, da sonst Anbackungen nicht auszuschließen sind.

Die Anordnung plattenförmiger Kontaktflächen bzw. Wärmetauscher ist im wesentlichen senkrecht zum Anströmboden, in rinnenförmigen Fließbetttrocknern, im wesentlichen auch parallel zur Längsrichtung der Rinne. Der Begriff "im wesentlichen" schließt auch geneigte und Zick-zack-Anordnungen ein, sofern es weder zu einem Produktstau noch zu Produktablagerungen auf geneigten Teilen des Wärmetauschers kommt. Die Platten können im Fließbetttrockner so eng nebeneinander angeordnet sein, daß eine Wirbelschicht zwischen den Platten aufrechterhalten werden kann. Zwecks Erhöhung der Kontaktfläche ist es auch möglich, strukturierte Platten zu verwenden oder zusätzlich Querstege zwischen einzelnen Platten anzuordnen, soweit der Perborat-Materialfluß dadurch nicht nachteilig gehemmt wird.

Dem rinnenförmigen Fließbetttrockner wird am einen Ende Natriumperborat-tetrahydrat zudosiert, am anderen Ende wird Natriumperborat-monohydrat abgenommen und einer üblichen Kühlvorrichtung zugeführt. Auch die Kühlvorrichtung kann vorteilhafterweise ein Fließbettkühler mit eingebauten Kontaktflächen sein.

Gemäß einer bevorzugten Ausführungsform sind im Bereich der Zugabestelle des Natriumperborattetrahydrats in einen rinnenförmigen Fließbetttrockner zweckmäßigerweise keine Kontaktflächen angeordnet, da hier die Gefahr der Anbackung von Perborat-tetrahydrat oder teilentwässertem Perborat-tetrahydrat besteht. Diese Gefahr wird vermieden, wenn die Temperaturbedingungen im Zugabebereich, welcher vorzugsweise als erste Zone ausgebildet ist und über eine separate Trocknerluftzufuhr verfügt, sowie die dieser ersten Zone zugeführten Menge an Trocknerluft und Perborat-tetrahydrat so aufeinander abgestimmt werden, daß sich im Bereich dieser Zone im wesentlichen nur eine dünne Hüllschicht aus Perborat-monohydrat auf einem Kern aus Perborat-tetrahydrat bildet. Zweckmäßig ist es, die Temperatur der Zuluft zur ersten Zone auf 100 bis 140 °C, insbesondere 110 bis 130 °C, einzustellen. Die Monohydrat-Hüllschicht verhindert ein Anbacken der Partikel an den Kontaktflächen der folgenden Zonen, wobei innerhalb der Partikel sehr wohl Schmelzprozesse ablaufen, welche zum Erhalt einer hohen Abriebfestigkeit und hohen Bruchfestigkeit des erzeugten Natriumperborat-monohydrats wesentlichen Anteil haben dürften.

In der oder den der Zugabezone folgenden Zone/n eines rinnenförmigen Fließbetttrockners, welchen Trocknerluft über eine gemeinsame oder mehrere getrennte Zuführungsorgane zugeführt wird, befinden sich ein oder mehrere Wärmetauscher. Das Wärmeträgermedium kann im Gleichstrom, vorzugsweise wird es aber im Gegenstrom zur Fließrichtung des zu dehydratisierenden Perborats geführt. Die Eingangstemperatur des Wärmeträgermediums wird vorzugsweise im Bereich zwischen etwa 100 °C und etwa 130 °C liegen. Die Ausgangstemperatur wird üblicherweise 5 bis 30 °C unterhalb der Eingangstemperatur liegen. Die Oberflächentemperatur der Wärmetauscher wird vorzugsweise unter 110 °C gehalten, da es bei der dargestellten Gegenstromführung sonst zu Anbackungen kommen kann. Aus energetischer Sicht wird eine möglichst große Temperaturdifferenz zwischen Ein-und Ausgangstemperatur des Mediums angestrebt.

Die Zulufttemperatur in der zweiten und gegebenenfalls den folgenden Zonen wird vorteilhafterweise im Bereich von 140 bis 190 °C, insbesondere zwischen 160 und 190 °C, liegen. Die Temperatur der Wirbelschicht wird in der ersten Zone unterhalb des Schmelzpunktes von Natriumperborat-tetrahydrat, im allgemeinen um 50 °C, und in den folgenden Zonen um und über dem Schmelzpunkt, d. h. um 60 °C und darüber bis etwa 90 °C liegen.

Es wurde gefunden, daß durch die erfindungsgemäßen Kontaktflächen, wie Rohre oder Platten, wobei letztere bevorzugt werden, in einer oder mehreren Trocknerzonen einer Wirbelschichtvorrichtung bei der Dehydratisierung von Natriumperborat-tetrahydrat überraschenderweise die Abriebbeständigkeit des Natriumperborat-monohydrats erhöht wird. Gleichzeitig wird der energetische Wirkungsgrad infolge reduzierter Strömungsgeschwindigkeit der Luft, verminderter Rückvermischung und Blasenverluste verbessert.

Durch Ausgestaltung der Kontaktflächen als Wärmetauscher werden sowohl die energetischen Vorteile als auch die Qualität bezüglich Abriebfestigkeit nach ISO 5937 und Bruchfestigkeit (Kugelmühlentest) in unerwartetem Ausmaß weiter gesteigert. Durch den partikelkonvektiven Wärmeeintrag an Kontaktflächen läßt sich bei gleicher Trocknerleistung die heiße Zuluftmenge auf einen minimalen zur Fluidisierung notwendigen Wert reduzieren. Hierdurch werden die Abluftverluste reduziert. Ferner läßt sich, da der Staubgehalt in der Abluft wegen der reduzierten Luftgeschwindigkeit gering ist, ein Teil der Abluft rezyklieren, woraus sich weitere Einsparungen ergeben.

Da ein Teil der erforderlichen Wärme für die Dehydratisierung des Tetrahydrats über die Wärmetauscher auf das Produkt übertragen wird, kann auch die Temperatur der heißen Zuluft etwas abgesenkt werden, wodurch die Betriebssicherheit erhöht wird, da es nicht mehr zum Verschmelzen des Tetrahydrats infolge zu hoher Bodentemperaturen kommt.

Es ist zwar bekannt - siehe Firmenprospekt Sulzer Escher Wyss "Fliessbett-Technik" (23.0831 RBhe 15) Seiten 2 und 8 -, Fließbetttrockner mit eingebauten Wärmetauschern zwecks indirekter Zufuhr von Wärme auf niedrigem Temperaturniveau zur Trocknung von Natriumperborat zu verwenden, jedoch ist diesem Dokument keine Anregung zu entnehmen, Natriumperborattetrahydrat in Natriumperborat-monohydrat zu überführen. Gerade wegen des niedrigen Schmelzpunktes von Natriumperborat-tetrahydrat (ca. 64 °C) mußte befürchtet werden, daß es zu Anbackungen an den Wärmetauschern kommt. Es war nicht vorherzusehen, daß derartige Anbackungen nicht auftreten, wenn (a) das Tetrahydrat so dem Fließbetttrockner zugeführt, daß die Partikel vor dem Kontakt mit der Oberfläche des Wärmetauschers bereits eine dünne Monohydrathülle aufweisen und (b) eine Oberflächentemperatur des Wärmetauschers im Bereich der noch überwiegend aus Tetrahydrat bestehenden Partikel von 110 °C nicht überschritten wird. Überraschenderweise wird unter den genannten Bedingungen ein außergewöhnlicher Effekt erzielt, nämlich die Abriebbeständigkeit signifikant erhöht.

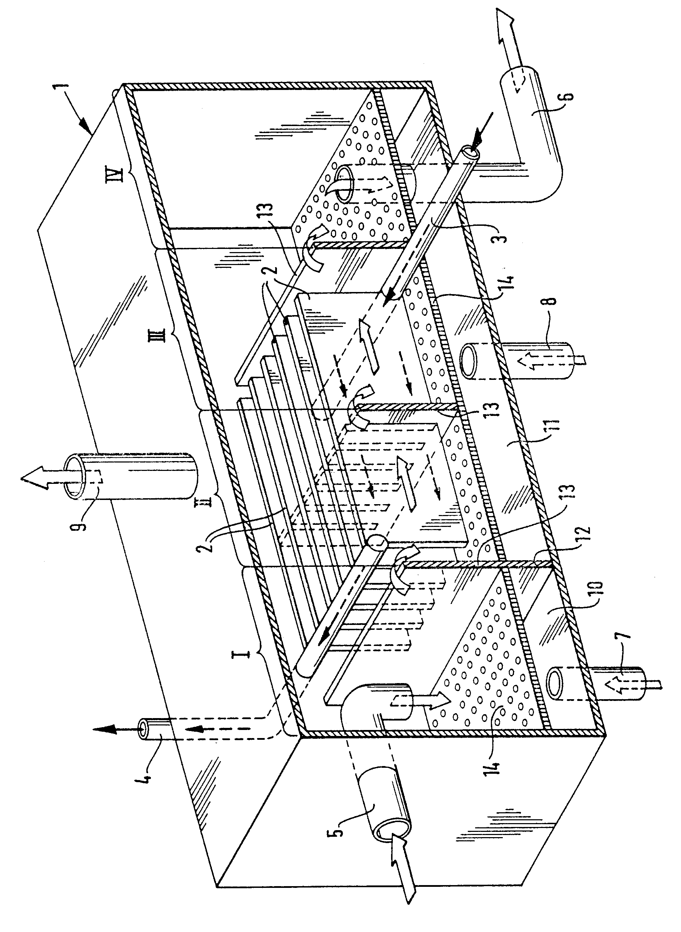

Eine besonders vorteilhafte Ausführungsform des erfindungsgemäßen Verfahrens folgt aus der schematischen Darstellung der Figur: Der Wirbelschichtfließbetttrockner (1) umfaßt vier Zonen, wobei Zone I der oberflächlichen Monohydratbildung (Vortrocknung) und die Zonen II bis IV der eigentlichen Dehydratisierung (Haupttrocknung) dienen. Ein plattenförmiger Wärmetauscher (2) mit parallel zur Luftströmung und Produktströmung ausgerichteter Orientierung befindet sich in den Zonen II und III. Das flüssige Heizmedium für den Wärmetauscher strömt in Gegenstromrichtung zum Produktstrom, Einlaß des Heizmediums bei (3), Auslaß bei (4). Tetrahydrat wird über Leitung (5) der wärmetauscherfreien Zone I zugeführt; Monohydrat wird am anderen Ende des Trockners aus Zone IV über Leitung (6) abgenommen und in einem nicht gezeigten Kühler abgekühlt. Zone I und Zonen II bis IV verfügen über einen getrennten Lufteintritt (7) bzw. (8), so daß die Vor- und Haupttrocknung bei unterschiedlicher Lufttemperatur durchgeführt werden können - tiefere Temperatur in der Vortrocknungszone. Die aus den Zonen I bis IV austretende Luft wird gemeinsam über Leitung (9) abgeführt und der nicht gezeigten Entstaubung und gegebenenfalls teilweisen Rezyklierung zugeführt. Der Luftkasten (10) unter der Zone I ist vom Luftkasten (11) der Zonen II bis IV durch ein Blech (12) abgetrennt. Zwischen den einzelnen Zonen befinden sich Wehre (13). Als Anströmboden (14) diente ein Conidurblech.

**Beispiele 1 bis 7**

In einer Vorrichtung gemäß Figur wurde Natriumperborat-tetrahydrat (NaPb-th) in Natriumperborat-monohydrat (NaPb-mh) überführt. Der Anströmboden des Wirbelschichttrockners hatte eine Fläche von 0,3 $m^2$; in den Zonen II und III war ein aus drei parallelen Platten bestehender Wärmetauscher mit einer Fläche von 0,6 $m^2$ angeordnet. Nach Einstellung des Massenstroms der Zuluft mit der Temperatur $T_{(I)}$ zur Zone I und des Massenstroms der Zuluft mit der Temperatur $T_{(II-IV)}$ zu den gemeinsam versorgten Zonen II-IV wurde NaPb-th in einer solchen Menge eingetragen, daß der $O_a$-Gehalt des ausgetragenen NaPb-mh mindestens 15 % betrug. Die Betriebsdaten, der ermittelte Abluft-Energieverlust pro kg zugeführtem NaPb-th sowie Analysendaten - Aktivsauerstoffgehalt ($O_a$), Abrieb nach dem ISO-Test 5937 und die Zerbrechlichkeit nach einem Kugelmühlentest (KM-Test) - des hergestellten Natriumperboratmonohydrats folgen aus der Tabelle. Eingesetzt wurde Natriumperborat-tetrahydrat aus der Produktion der Anmelderin.

Bestimmung der Zerbrechlichkeit (KM-test): Kugelmühle aus VA, Höhe 10 cm, innerer Durchmesser 11 cm, Drehzahl 150 U/Min, Dauer 6 Min; Füllmenge: 50 g Probe und 8 VA-Kugeln ($\emptyset = 20$ mm). In der Kugelmühle behandelte Probe und unbehandelte Vergleichsprobe werden je 10 Min gesiebt - Sieb mit 0,0246 mm Öffnung und 0,053 mm Öffnung (DIN 4188). Zerbrechlichkeit (%) = Differenz der Rückstandsumme beider Siebe ungemahlener minus gemahlener Probe mal 2.

## T a b e l l e

| Beispiel Nr. | | 1 | 2 | 3 | 4 | 5 | 6 | 7 |
|---|---|---|---|---|---|---|---|---|
| Zufuhr NaPb-Th (kg/h) | | 49,0 | 56,7 | 55,6 | 40,8 | 43,1 | 45,1 | 40,1 |
| Zufuhr Luft Zone I (kg/h) | | 129 | 129 | 129 | 129 | 129 | 129 | 129 |
| Temp. " " ($^o$C) | | 126 | 128 | 125 | 128 | 122 | 123 | 123 |
| Zufuhr Luft Zone II-IV (kg/h) | | 322 | 568 | 413 | 374 | 271 | 264 | 277 |
| Temp. " " ($^o$C) | | 180 | 182 | 180 | 180 | 183 | 187 | 159 |
| WT-Öl: Menge (kg/h) | | 570 | – | 528 | – | 372 | 576 | 570 |
| " : Temp. ein ($^o$C) | | 118 | – | 120 | – | 127 | 116 | 115 |
| " : Temp. aus ($^o$C) | | 100 | – | 102 | – | 103 | 98 | 98 |
| Temp. Wirbelschicht | | | | | | | | |
| Zone I ($^o$C) | | 55 | 53 | 50 | 49 | 46 | 45 | 46 |
| Zone II ($^o$C) | | 73 | 72 | 60 | 57 | 60 | 58 | 57 |
| Zone III ($^o$C) | | 70 | 65 | 66 | 61 | 66 | 63 | 63 |
| Zone IV ($^o$C) | | 72 | 79 | 75 | 75 | 76 | 76 | 77 |
| Abluft-Energie-verluste (kJ/kg NaPb-th) | | 287 | 420 | 314 | 359 | 280 | 263 | 305 |
| NaPb-mh | | | | | | | | |
| O$_2$ (%) | | 15,6 | 15,4 | 15,5 | 15,4 | 15,0 | 15,1 | 15,3 |
| Abrieb (ISO) (%) | | 5,1 | n.b. | 5,3 | 5,3 | 4,7 | 4,3 | 4,8 |
| Zerbrechlich-keit (KM) (%) | | 6,2 | n.b. | 8,0 | 8,1 | 5,7 | 5,5 | 5,8 |

**Vergleichsbeispiele 1 und 2**

In dem beispielgemäß verwendeten kanalförmigen Fließbetttrockner mit vier Zonen, jedoch ohne die erfindungsgemäßen Kontaktflächen, wurde Natriumperborat-tetrahydrat zum Monohydrat dehydratisiert.

| | VB 1 | VB 2 |
|---|---|---|
| Zufuhr NaPb·th: | 48,9 kg/h | 32 kg/h |
| Zuluft zu Zone I | | |
| Temperatur: | 123 °C | 125 °C |
| Menge: | 129 kg/h | 129 kg/h |
| Zuluft zu Zonen II-IV | | |
| Temperatur: | 179 °C | 183 °C |
| Menge: | 533 kg/h | 286 kg/h |
| Wirbelschichttemperatur Zone I: | 59 °C | 55 °C |
| Wirbelschichttemperatur Zone II: | 61 °C | 61 °C |
| Wirbelschichttemperatur Zone III: | 67 °C | 64 °C |
| Wirbelschichttemperatur Zone IV: | 97 °C | 76 °C |
| Abluft-Energieverlust (kJ/kg NaPb-th): | 544 | 430 |
| NaPb-mh | | |
| $O_a$: | 15,2 % | 15,4 % |
| Abrieb (ISO 5937): | 14,1 % | 14,2 % |
| KM-Test: | 18,0 % | 15,9 % |

Beim Vergleich der erfindungsgemäßen Beispiele mit den Vergleichsbeispielen zeigt sich, daß das erfindungsgemäße Verfahren zu einem NaPb-mh mit wesentlich höherer Abriebbeständigkeit führt. Zudem werden die Abluft-Energieverluste bereits deutlich reduziert, wenn im Fließbett ein unbeheizter, nur als Kontaktfläche wirkender Wärmeaustauscher angeordnet ist - vergleiche beispielsweise Beispiel 2 mit VB 1 oder Beispiel 4 mit VB 2. Eine weitere Minderung des Energieverlusts wird durch die Beheizung der Kontaktflächen erzielt - vergleiche beispielsweise die Beispiele 2 mit 1 oder 4 mit 5.

**Patentansprüche**

1. Verfahren zur Herstellung von Natriumperboratmonohydrat durch Dehydratisierung von Natriumperborat-tetrahydrat in einer Wirbelschicht mit erhitzter Luft, wobei die Temperatur der in die Wirbelschicht eintretenden Luft zwischen 80 und 220 °C und die Temperatur der Wirbelschicht zwischen 40 und 90 °C liegt,
dadurch gekennzeichnet,
daß man innerhalb der Wirbelschicht Kontaktflächen anordnet, deren Gesamtfläche das 1- bis 500-fache der Fläche des Wirbelschicht-Anströmbodens ausmacht.

2. Verfahren nach Anspruch 1,
dadurch gekennzeichnet,
daß man plattenförmige Kontaktflächen, deren Gesamtfläche das 2- bis 100-fache der Fläche des Wirbelschicht-Anströmbodens ausmacht, verwendet, welche eine zum Anströmboden im wesentlichen senktrechte Orientierung aufweisen.

3. Verfahren nach Anspruch 1 oder 2,
dadurch gekennzeichnet,
daß man als Kontaktflächen Wärmetauscher, vorzugsweise plattenförmige Wärmetauscher, verwendet.

4. Verfahren nach Anspruch 3,
dadurch gekennzeichnet,
daß der Wärmetauscher von einem flüssigen Wärmeträgermedium mit einer Eingangstemperatur im Bereich von 70 bis 140 °C durchströmt wird, wobei Eingangstemperatur und Strömungsgeschwindigkeit des Wärmeträgermediums vorzugsweise so gewählt werden, daß sich an der Oberfläche der Wärmetauscher eine Temperatur von 90 bis 110 °C einstellt.

5. Verfahren nach einem der Ansprüche 1 bis 4,
dadurch gekennzeichnet,

EP 0 626 343 B1

daß man die Dehydratisierung in einem langgestreckten ein- oder mehrzonigen, mit Kontaktflächen, vorzugsweise mit einem oder mehreren plattenförmigen Wärmetauschern ausgestatteten Fließbetttrockner (Fließbettrinne) ausführt, wobei man am einen Ende des Trockners kontinuierlich Natriumperborat-tetrahydrat zuführt und am anderen Ende Natriumperborat-monohydrat abführt.

6. Verfahren nach Anspruch 5,
dadurch gekennzeichnet,
daß man im Bereich der Zugabestelle des Natriumperborat-tetrahydrats in die Wirbelschicht sowie in Zonen, in welchen das zugeführte Natriumperborat-tetrahydrat noch keine Natriumperborat-monohydrat-Hüllschicht aufweist, keine Kontaktflächen anordnet.

7. Verfahren nach Anspruch 5 oder 6,
dadurch gekennzeichnet,
daß man dem/den in mindestens einer Zone der Fließbettrinne angeordneten Wärmetauscher/n in Gegenstromrichtung zur Fließrichtung des zu dehydratisierenden Perborats ein flüssiges Wärmeträgermedium zuführt und die Temperatur der Oberfläche des/der Wärmetauscher vorzugsweise im Bereich von 90 bis 110 °C hält.

8. Verfahren nach einem der Ansprüche 5 bis 7,
dadurch gekennzeichnet,
daß man die Dehydratisierung in einem mindestens zweizonigen, rinnenförmigen Fließbetttrockner durchführt, der mit mindestens einem plattenförmigen Wärmetauscher, dessen Platten im wesentlichen senkrecht zum Anströmboden und parallel zur Längsrichtung der Rinne ausgerichtet sind, ausgestattet ist, wobei man der ersten Zone, welche vorzugsweise frei von Kontaktflächen ist, Trocknungsluft mit einer Zulufttemperatur von 100 bis 140 °C und der/den folgenden Zone/n Trocknungsluft mit einer Zulufttemperatur von 140 bis 190 °C zuführt.

**Claims**

1. Process for the production of sodium perborate monohydrate by dehydration of sodium perborate tetrahydrate in a fluidised bed by means of heated air, with the temperature of the air entering the fluidised bed being between 80 and 220 °C and the temperature of the fluidised bed being between 40 and 90 °C,
characterised in that
contact surfaces whereof the total area constitutes from 1 to 500 times the area of the operating floor of the fluidised bed are arranged within the fluidised bed.

2. Process according to claim 1,
characterised in that
flat contact surfaces whereof the total area constitutes from 2 to 100 times the area of the operating floor of the fluidised bed are used, which are positioned essentially vertically to the operating floor of the fluid bed.

3. Process according to claim 1 or 2,
characterised in that
the contact surfaces used are heat exchangers, preferably flat heat exchangers.

4. Process according to claim 3,
characterised in that
a liquid heat-exchanging medium having an inlet temperature in the range of from 70 to 140 °C is passed through the heat exchanger, with the inlet temperature and the flow rate of the heat-exchanging medium preferably being selected so that a temperature of from 90 to 110 °C is established at the surface of the heat exchanger.

5. Process according to one of claims 1 to 4,
characterised in that
the dehydration is carried out in a long, single-zone or multiple-zone fluidised bed dryer (fluidised bed channel) equipped with contact surfaces, preferably with one or more flat heat exchangers, with sodium

7

perborate tetrahydrate being fed continuously at one end of the dryer and sodium perborate monohydrate being withdrawn at the other end.

6. Process according to claim 5,
characterised in that
no contact surfaces are provided in the region of the point where sodium perborate tetrahydrate is fed into the fluidised bed, nor in zones wherein the sodium perborate tetrahydrate fed in as yet has no covering layer of sodium perborate monohydrate.

7. Process according to claim 5 or 6,
characterised in that
a liquid heat-exchanging medium is supplied, in a direction countercurrent to the flow of the perborate to be dehydrated, to the heat exchanger(s) arranged in at least one zone of the fluidised bed channel and the temperature of the surface of the heat exchanger(s) is maintained preferably in the range of from 90 to 110°C.

8. Process according to one of claims 5 to 7,
characterised in that
the dehydration is carried out in an at least two-zone, channel-shaped fluidised bed dryer equipped with at least one flat heat exchanger, the plates whereof are aligned essentially vertically to the operating floor of the fluidised bed and parallel to the longitudinal direction of the channel, with drying air being supplied to the first zone, which preferably contains no contact surfaces, at an inlet temperature of from 100 to 140°C and with dry air being supplied to the following zone(s) at an inlet temperature of from 140 to 190°C.

**Revendications**

1. Procédé pour la fabrication de perborate de sodium monohydraté par déshydratation de perborate de sodium tétrahydraté dans un lit fluidisé à l'aide d'air chaud, la température de l'air alimenté dans le lit fluidisé étant située entre 80 et 220 °C et la température du lit fluidisé étant comprise entre 40 et 90 °C, caractérisé en ce qu'on dispose dans le lit fluidisé des surfaces de contact dont la surface totale représente 1 à 500 fois la surface du fond de fluidisation du lit fluidisé.

2. Procédé selon la revendication 1, caractérisé en ce qu'on utilise des surfaces de contact en forme de plaques dont la surface totale représente 2 à 100 fois la surface du fond de fluidisation du lit fluidisé, lesdites surfaces présentant une orientation essentiellement perpendiculaire par rapport au fond de fluidisation.

3. Procédé selon la revendication 1 ou 2, caractérisé en ce qu'on utilise comme surfaces de contact des échangeurs de chaleur, de préférence des échangeurs de chaleur sous forme de plaques.

4. Procédé selon la revendication 3, caractérisé en ce que l'échangeur de chaleur est traversé par un agent caloporteur liquide présentant une température à l'entrée comprise entre 70 et 140 °C, la température à l'entrée et la vitesse d'écoulement de l'agent caloporteur étant de préférence choisis de telle manière que la température à la surface de l'échangeur de chaleur est comprise entre 90 et 110 °C.

5. Procédé selon une quelconque des revendications 1 à 4, caractérisé en ce qu'on effectue la déshydratation dans un sécheur à lit fluidisé longitudinal comportant une ou plusieurs zones et des surfaces de contact, contenant de préférence un ou plusieurs échangeurs de chaleur sous forme de plaques (conduit à lit fluidisé), en alimentant en continu en une extrémité du sécheur du perborate de sodium tétrahydraté et en évacuant du perborate de sodium monohydraté en l'autre extrémité.

6. Procédé selon la revendication 5, caractérisé en ce qu'on ne dispose pas de surfaces de contact dans le lit fluidisé au niveau de l'alimentation du perborate de sodium tétrahydraté ni dans les zones dans lesquelles le perborate de sodium tétrahydraté n'est pas encore enveloppé par une couche de perborate de sodium monohydraté.

**7.** Procédé selon la revendication 5 ou 6, caractérisé en ce qu'on alimente dans l'échangeur ou les échangeurs de chaleur disposés dans au moins une zone du conduit à lit fluidisé, à contre-courant par rapport au sens d'écoulement du perborate à déshydrater, un agent caloporteur liquide et en ce qu'on maintient de préférence la température de la surface de l'échangeur ou des échangeurs dans une plage comprise entre 90 et 110 °C.

**8.** Procédé selon une quelconque des revendications 5 à 7, caractérisé en ce qu'on effectue la déshydratation dans un sécheur à lit fluidisé en forme de conduit comportant au moins deux zones, équipé d'au moins un échangeur de chaleur en forme de plaque dont les plaques sont essentiellement perpendiculaires par rapport au fond de fluidisation et parallèles par rapport à la direction longitudinale du conduit, en alimentant dans la première zone, qui est de préférence exempte de surfaces de contact, de l'air de séchage présentant une température à l'entrée de 100 à 140 °C et dans la zone suivante ou les zones suivantes de l'air de séchage présentant une température à l'entrée de 140 à 190 °C.